# EUROPÄISCHE PATENTSCHRIFT

(11) **EP 1 459 042 B1**
(45) Veröffentlichungstag und Bekanntmachung des Hinweises auf die Patenterteilung: **13.09.2006**
(21) Anmeldenummer: 02774394.7
(22) Anmeldetag: 20.09.2002
(51) Int. Cl.: G01K 7/02, G01K 1/22

(54) **THERMISCHER SENSOR**
THERMAL SENSOR
CAPTEUR THERMIQUE

(30) Priorität: 15.12.2001 DE 10161771
(43) Veröffentlichungstag der Anmeldung: 22.09.2004
(73) Patentinhaber: ROBERT BOSCH GMBH, 70442 Stuttgart (DE)
(72) Erfinder: ARNDT, Michael, 72762 Reutlingen (DE); KRUMMEL, Christian, 72138 Kirchentellinsfurt (DE)
(86) Internationale Anmeldenummer: PCT/DE2002/003542
(87) Internationale Veröffentlichungsnummer: WO 2003/052365

(56) Entgegenhaltungen:
- DE-A- 19 504 353
- DE-C- 10 057 258
- US-A- 3 408 477
- US-A- 5 003 295
- US-A- 5 143 325

## Beschreibung

### Stand der Technik

Die Erfindung geht aus von einem thermischen Sensor nach der Gattung des unabhängigen Patentanspruchs.

Aus der unveröffentlichten deutschen Patentanmeldung der Anmelderin DE 100 57 258 ist ein thermischer Sensor bekannt, der zur Detektion eines Seitenaufpralls verwendet wird. Dabei wird der bei einer einen Seitenaufprall begleitenden Verformung des Seitenteils auftretenden adiabatischer Temperaturanstieg gemessen, um so den Seitenaufprall schnell zu erkennen.

Aus US-A-5,003,295 ist eine Eisdetektorprobe mit einem Sensorelement und thermische Mittel zur Entfernung eines Belags vom Sensierungselement bekannt. Darüber hinaus weist der Sensor eine Auswerteschaltung auf, die sich in einem Gehäuse befindet und zur Auswertung eines Ausgangssignals des Sensors dient.

### Vorteile der Erfindung

Der erfindungsgemäße thermische Sensor weist ebenfalls Mittel zur Entfernung eines Belags vom Sensierungselement auf, das zur Erfassung der Temperatur verwendet wird. Damit ist es möglich, Wasser, Eis oder andere organische Beläge von dem Sensierungselement, üblicherweise Widerstände auf einer temperaturisolierten Membran, zu entfernen. Dies hat den Vorteil, dass eine erhöhte Betriebssicherheit erreicht wird, da eine Beeinträchtigung der Aufprallsensierung durch einen Beleg auf dem Sensierungselement sowohl erkannt als auch entfernt werden kann.

Der thermische Sensor weist auch Mittel zur Erkennung des Belags auf. Damit wird nur situationsbedingt ein Einsatz der Mittel zur Entfernung des Belags notwendig. Wären diese Mittel zur Erkennung des Belags nicht vorhanden, dann müssen die Mittel zur Entfernung des Belags in bestimmten Abständen wiederholt eingesetzt werden.

Die Mittel zur Entfernung des Belags haben vorteilhafter Weise eine Ansteuerschaltung für das Sensierungselement, die eine Aufheizung des Sensierungselements bewirkt. Damit wird beispielsweise Wasser durch Aufheizen entfernt. Andere Beläge, die im Wasser gelöst sind, werden so mitverdampft. Gemäß der Erfindung mit den Merkmalen des Anspruchs 1 weist der thermische Sensor ein Referenzsensierungselement auf, das parallel zu dem Sensierungselement von der Ansteuerschaltung angesteuert wird, wobei die Auswerteschaltung aus einem Vergleich des ersten Ausgangssignals des Sensierungselements mit einem zweiten Ausgangssignal des Referenzsensierungselements den Belag auf dem Sensierungselement ermittelt. Indem die Ansteuerschaltung ein periodisches Signal auf das Referenzsensierungselement und das Sensierungselement gibt, wird durch ein Signalvergleich in Amplitude und Phase eine Detektion eines Belags auf dem Sensierungselement möglich. Notwendig dafür ist, dass das Referenzsensierungselement abgeschirmt von der Umwelt ist, so dass sich hier keine Beläge absetzen können. Alternativ ist es möglich, dass das auf das Sensierungselement gegebene Signal mit dem Ausgangssignal des Sensierungselements verglichen wird, um so die Übertragungsfunktion des Sensierungselements zu ermitteln. Auch hier ist durch Amplituden und Phasenvergleich eine Detektion des Belags möglich. Durch eine eingehende Analyse der Übertragungsfunktion ist auch die Bestimmung der Art des Belags möglich. Alternativ kann das Sensorelement zu einem Zeitpunkt, zu dem das Sensorelement nicht mit einem Belag beaufschlagt ist, mit einem Heizsignal angesteuert werden. Ein solcher Zeitpunkt kann beispielsweise bei der Endkalibrierung vorliegen. Das so erhaltene Ausgangssignal wird dann als Referenzsignal für dieses Sensorelement verwendet. Somit wird kein zusätzliches Referenzsensierungselement benötigt. Für die Detektion eines Belags wird, wie vorher beschrieben, ein Amplituden- oder Phasenvergleich zwischen dem Referenzsignal und einem zu einem beliebigen Zeitpunkt gemessenen Ausgangssignal durchgeführt. Alternativ kann auch die Übertragungsfunktion berechnet und für die Belagsdetektion herangezogen werden.

Weiterhin ist es von Vorteil, dass die Auswerteschaltung aus einer Abkühlung des Sensierungselements den Belag erkennt, wobei vorher die Ansteuerschaltung eine Aufheizung des Sensierungselements bewirkt hatte. Damit kann im Sinne einer Sprungfunktion die Antwort auf diese Sprungfunktion durch das Sensierungselement zur Detektion des Belags auf dem Sensierungselement verwendet werden. Unter Sprungantwort wird hier die Aufheizung als Sprung verstanden, um dann als Antwortverhalten die Abkühlung zu bewerten. Beispielsweise kann hier ein typischer Werteabfall auf den Kehrwert der Eulerschen Zahl erkannt werden, die ein typischer Wert für solche Bewertungen ist.

Schließlich ist es auch von Vorteil, dass das Sensierungselement selbst eine katalytische Schicht aufweist, die durch Aufheizen die Entfernung des Belags bewirkt. Diese katalytische Schicht kann aus einem Edelmetall (Rhodium, Platin oder Palladium) bestehen. Dabei kann insbesondere eine pyrolytische Reinigung der Membran durchgeführt werden. Damit kann der thermische Sensor insbesondere von organischen Belägen gereinigt werden. Die für den Start der pyrolytischen Reinigung erforderlichen Temperatur kann durch eine Beheizung der Membran mittels der Widerstände, die auf der Membran aufgebracht sind, erreicht werden.

### Zeichnung

Ausführungsbeispiele der Erfindung sind in den Zeichnungen dargestellt und werden in der nachfolgenden Beschreibung näher erläutert. Es zeigen Figur 1 ein Blockschaltbild des erfindungsgemäßen thermischen Sensors, Figur 2 ein Ausführungsbeispiel des thermischen Sensors als mikromechanischer Sensor, Figur 3 ein Ersatzschaltbild des thermischen Sensors, Figur 4 ein Vergleich eines Eingangs- und Ausgangssignals des erfindungsgemäßen Sensors, Figur 5 ein zweites Ersatzschaltbild des thermischen Sensors und Figur 6 ein Abkühlvorgang des thermischen Sensors mit und ohne Belag.

### Beschreibung

Thermische Sensoren werden zunehmend in der Kraftfahrzeugtechnik eingesetzt. Wie oben dargestellt, können solche thermischen Sensoren auch zur Seitenaufprallsensierung verwendet werden. Durch den Einsatz im Kraftfahrzeug sind die thermischen Sensoren Witterungsbedingungen, die stark wechselnd sind, ausgesetzt. Bei solchen Witterungsbedingungen ist es insbesondere möglich, dass der thermische Sensor, der mit seiner Umwelt in Kontakt sein muss, mit Flüssigkeit, also Wasser, belegt sein kann. Dies kann durch Betauung, Vereisung oder Verschmutzung des Sensors entstehen.

Erfindungsgemäß wird nun ein thermischer Sensor vorgeschlagen, der Mittel aufweist, um solche Beläge zu entfernen. In Weiterbildungen weist der thermische Sensor Mittel auf, um die Beläge zu erkennen und letztlich auch eine katalytische Schicht, die auf dem Sensierungselement des thermischen Sensors vorhanden ist, um durch Aufheizen den Belag zu entfernen.

Ein thermischer Sensor weist ein Sensierungselement zur Erfassung der Temperatur und eine Auswerteschaltung für ein Ausgangssignal des Sensierungselements auf. Das Sensierungselement ist üblicherweise durch Metallfilmwiderstände auf einer thermisch isolierenden Membran realisiert. Die Auswerteschaltung sensiert die Signale des Sensierungselements. Diese werden von der Auswerteschaltung verstärkt und digitalisiert. Sie können dann an ein Steuergerät übertragen werden. Die Mittel zur Entfernung des Belags vom Sensierungselement werden typischerweise durch eine Heizung realisiert. Dies kann durch die Heizung des Sensierungselements selbst entstehen oder durch eine indirekte Heizung. Durch die katalytische Schicht kann diese Abheizung des Belags noch verstärkt werden.

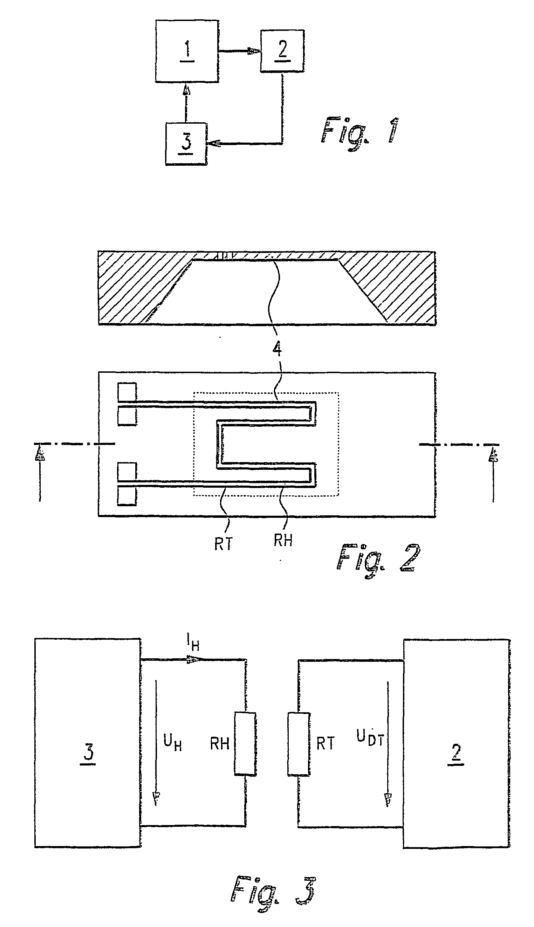

Figur 1 zeigt als Blockschaltbild den thermischen Sensor. Ein Sensierungselement 1 ist an eine Auswerteschaltung 2 angeschlossen. Die Auswerteschaltung 2 weist wie eben dargestellt einen Messverstärker, einen Analog-/Digital-Wandler und eine Signalverarbeitung auf. Signalverarbeitung ist üblicherweise durch einen Prozessor oder durch einen ASIC realisiert. Durch eine Ansteuerschaltung 3, die das Sensierungselement 1 ansteuert und selbst von der Auswerteschaltung 2 angesteuert wird, wird ein Regelkreis aufgebaut. Hier kann in Abhängigkeit von den ausgewerteten Signalen das Sensierungselement 1 durch die Ansteuerschaltung 3 angesteuert werden. Die Ansteuerschaltung 3 weist hierfür Stromquellen und ggf. Leistungsverstärker auf.

Figur 2 zeigt eine Realisierung des Sensierungselements. Auf einer Membran 4 befinden sich Metallfilmwiderstände RT und RH. Figur 2 zeigt die Draufsicht und einen Schnitt durch die Mitte der Struktur. Die Membran 4 ist durch Ätzung eines Substrats vorzugsweise eines halbleitenden Substrats hergestellt worden. Durch Abscheidungstechniken wie Aufdampfen oder Elektrodeposition sind die Metallfilmwiderstände RT und RH auf der Membran abgeschieden worden. Als Material für den Metallfilm wird üblicherweise Platin verwendet. Die Widerstände RT und RH bilden eine kleine Mäanderstruktur und sind elektrisch voneinander getrennt. Sie sind jedoch so nahe beieinander angeordnet, dass eine indirekte Heizung möglich ist. Der Widerstand RT wird für die Messung des Temperaturanstiegs beim Einsatz als Seitenaufprallsensor verwendet. Mit der Auswerteschaltung 2 wird sein Widerstandswert gemessen und ein widerstandsproportionales Signal UDT erzeugt. Mit Hilfe des zweiten Widerstands RH, der thermisch mit dem ersten Widerstand RT gekoppelt ist, kann ein Temperatursignal simuliert werden. Dafür wird die Ansteuerschaltung 3 benötigt, die RH mit einer Heizspannung UH oder einem Heizstrom IH ansteuert.

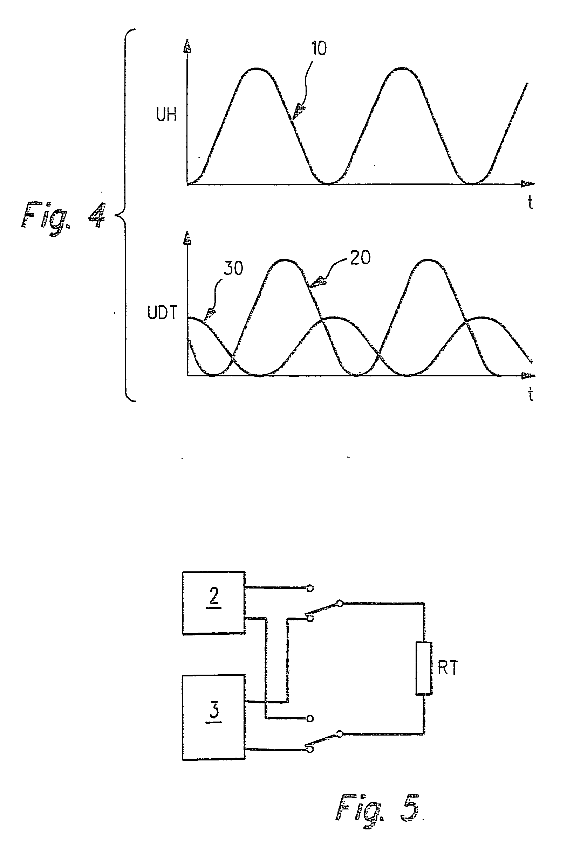

Figur 3 zeigt als ein einfaches Ersatzschaltbild den eben beschriebenen Sachverhalt. Der Widerstand RH ist an die Ansteuerschaltung 3 angeschlossen und wird durch diese über einen Strom IH bzw. eine Spannung UH aufgeheizt. Über dem Widerstand RT wird die Spannung UDT abgegriffen, die die Auswerteschaltung 2 misst.

Figur 4 zeigt in einem Diagramm den Signalverlauf der eben beschriebenen Signale. Im oberen Diagramm wird die Spannung UH beschrieben. Dies ist die Spannung UH, die zum Aufheizen des Widerstands RH verwendet wird. Hier wird eine Sinusspannung 10 eingesetzt. Im unteren Spannungszeitdiagramm, wobei die Zeit auf der Abzisse abgetragen ist und die Spannung auf der Ordinate, wird auf der Ordinate hier die Spannung UDT dargestellt, die die Auswerteschaltung 2 misst.

Wird der Widerstand RH mit dem zeitlich veränderlichen Signal UH 10 angesteuert, so bewirkt dieses ein periodisches Aufheizen und Abkühlung der Widerstände RH und RT. Dieses Aufheizen und Abkühlen wird mit der Auswerteschaltung 2 gemessen und ein temperaturabhängiges Ausgangssignal UDT generiert. Für ein bekanntes Ansteuersignal wird bei einem unverschmutzen und unbeschädigten Sensorelement immer ein Signal mit definierter Amplitude und einer definierten Phasenverschiebung entstehen. Dies ist im unteren Diagramm mit dem Bezugszeichen 20 gekennzeichnet. Weist ein Sensorelement eine Betauung, Vereisung oder Verschmutzung auf, dann ergibt sich für das Ausgangssignal UDT aufgrund der erhöhten Masse und Wärmeableitung der Widerstände eine veränderte Phasenverschiebung und/oder eine veränderte Amplitude, so dass das Signal 30 erzeugt wird. Eine Messung dieser Parameter erlaubt es daher, einen Belag zu erkennen. Das Verfahren wird in Figur 4 mit einem sinusförmigen Signal dargestellt, es sind jedoch grundsätzlich auch andere Signalformen, wie ein Rechteck oder Sägezahn, einsetzbar.

Das erfindungsgemäße Messprinzip läßt sich auch auf Sensierungselemente anwenden, bei denen auf den Heizwiderstand RH verzichtet wird. Dies ist in Figur 5 dargestellt. Hier ist nur der Widerstand RT vorhanden. Bei der Messung wird dieser Widerstand RT sowohl für die Aufheizung als auch für die Messung verwendet. Dafür wird der Widerstand RT zuerst an die Ansteuerschaltung 3 angekoppelt. Nach dem Aufheizen wird der Widerstand von der Ansteuerschaltung 3 abgekoppelt und an die Auswerteschaltung 2 angeschlossen. Das Signal UDT stellt somit den Abkühlvorgang des Sensierungselements dar. Der Abkühlvorgang eines unbelegten Sensorelements verläuft sehr schnell, ca. 0,1 bis 50ms, der Abkühlvorgang eines Sensierungselements mit Belag hingegen verläuft langsamer, da die thermisch relevante Masse größer ist. Wird die Zeit zum Abschalten der Heizung bis zum Erreichen einer bestimmten Temperatur des Widerstands RT respektive eines Spannungswertes UTDT gemessen, so ergibt sich für ein Sensierungselement mit einem Belag eine Zeitverzögerung δT, die gemessen werden kann.

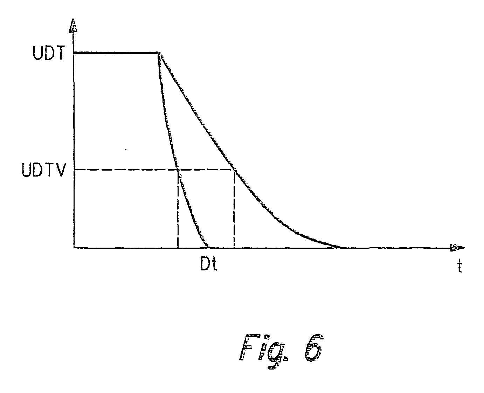

Figur 6 zeigt in einem Spannungszeitdiagramm dieses Verhalten. Hier sind zwei Kurven dargestellt, die verschiedene Abfallzeiten für die Abkühlung des Widerstands RDT darstellen. Die rechte fallende Kurve zeigt die Abkühlung eines verschmutzten Widerstands, d.h. die Zeit ist länger als die für einen nicht belegten Sensor. Dieses Verhalten wird durch die linke Kurve dargestellt, die einen steileren Abfall, also Abkühlung, zeigt. Die Umschaltung zwischen Auswerteschaltung 2 und Ansteuerschaltung 3 kann elektronisch oder elektromechanisch erfolgen.

Eine Vereisung oder Betauung des thermischen Sensor kann durch eine Beheizung des Sensors vermieden oder beseitigt werden. Sind die Widerstände RT und RH vorhanden, so kann RH für die Beheizung verwendet werden. Die Beheizung kann mittels der Ansteuerschaltung 3 ohne Umschalten durchgeführt werden. Ist nur der Widerstand RT vorhanden, so muss er für den Heizvorgang von der Auswerteschaltung 2 abgekoppelt und an die Ansteuerschaltung 3 angekoppelt werden.

Die Beheizung kann entweder langsam oder in einem Impuls erfolgen. Bei einer langsamen Beheizung kommt es zu einer Verdampfung des gesamten Volumens des Eis- oder Wasserfilms. Bei einer impulsartigen Beheizung kann eine Filmverdampfung herbeigeführt werden, die zu einem Abgleiten der Eis- oder Flüssigkeitsschicht führt.

Durch einen Einsatz einer katalytischen Schicht im Bereich der Membran 4 kann schon bei relativ geringen Temperaturen eine pyrolytische Reinigung der Membran 4 durchgeführt werden. So kann der Sensor von organischen Belägen gereinigt werden. Die für den Start der pyrolytischen Bereinigung erforderliche Temperatur kann durch Beheizung der Membran 4 mittels der Widerstände RT und RH erreicht werden.

## Patentansprüche

1. Thermischer Sensor, wobei der thermische Sensor ein Sensierungselement (1) zur Erfassung einer Temperatur und einer Auswerteschaltung (2) zur Auswertung eines Ausgangssignals des Sensierungselements (1) aufweist, wobei der thermische Sensor Mittel zur Entfernung eines Belags vom Sensierungselement (1) aufweist, **dadurch gekennzeichnet, dass** der thermische Sensor ein Referenzsensierungselement (RH) aufweist, das parallel zu dem Sensierungselement (RT) von der Ansteuerschaltung (3) angesteuert wird, wobei die Auswerteschaltung (2) aus einem Vergleich des ersten Ausgangssignals des Sensierungselements (RT) mit einem zweiten Ausgangssignals des Referenzsensierungselements (RH) den Belag auf dem Sensierungselement (RH) ermittelt.

2. Thermischer Sensor nach Anspruch 1, **dadurch gekennzeichnet, dass** der thermische Sensor Mittel zur Erkennung des Belags aufweist.

3. Thermischer Sensor nach Anspruch 1 oder 2, **dadurch gekennzeichnet, dass** die Mittel zur Entfernung des Belags eine Ansteuerschaltung (3) für das Sensierungselement (1) aufweisen, die eine Aufheizung des Sensierungselements (1) bewirkt.

4. Thermischer Sensor nach Anspruch 1, **dadurch gekennzeichnet, dass** die Ansteuerschaltung (3) das Referenzsensierungselement (RH) und das Sensierungselement (RT) mit einem periodischen Signal ansteuert.

5. Thermischer Sensor nach Anspruch 1, **dadurch gekennzeichnet, dass** die Auswerteschaltung (2) aus einer Abkühlung des Sensierungselements (RT) den Belag erkennt, wobei vorher die Ansteuerschaltung (3) eine Aufheizung des Sensierungselements (1) bewirkt hatte.

6. Thermischer Sensor nach Anspruch 1, **dadurch gekennzeichnet, dass** die Mittel zur Entfernung des Belags eine katalytische Schicht auf dem Sensierungselement aufweisen, die durch Aufheizen die Entfernung des Belags bewirkt.

7. Thermischer Sensor nach Anspruch 6, **dadurch gekennzeichnet, dass** die katalytische Schicht als Edelmetall, vorzugsweise Rhodium, Platin oder Palladium, ausgebildet ist.

## Claims

1. Thermal sensor, the thermal sensor having a sensing element (1) for sensing a temperature and an evaluation circuit (2) for evaluating an output signal of the sensing element (1), the thermal sensor having means for removing a deposit from the sensing element (1), **characterized in that** the thermal sensor has a reference sensing element (RH), which is triggered by the triggering circuit (3) in parallel with the sensing element (RT), the evaluation circuit (2) determining the deposit on the sensing element (RH) from a comparison of the first output signal of the sensing element (RT) with a second output signal of the reference sensing element (RH).

2. Thermal sensor according to Claim 1, **characterized in that** the thermal sensor has means for detecting the deposit.

3. Thermal sensor according to Claim 1 or 2, **characterized in that** the means for removing the deposit have a triggering circuit (3) for the sensing element (1), which brings about heating of the sensing element (1).

4. Thermal sensor according to Claim 1, **characterized in that** the triggering circuit (3) triggers the reference sensing element (RH) and the sensing element (RT) with a periodic signal.

5. Thermal sensor according to Claim 1, **characterized in that** the evaluation circuit (2) detects the deposit from a cooling of the sensing element (RT), the triggering circuit (3) previously having brought about heating of the sensing element (1).

6. Thermal sensor according to Claim 1, **characterized in that** the means for removing the deposit have a catalytic layer on the sensing element, which brings about removal of the deposit by heating.

7. Thermal sensor according to Claim 6, **characterized in that** the catalytic layer is formed as a noble metal, preferably rhodium, platinum or palladium.

## Revendications

1. Capteur thermique, présentant un élément de détection (1) pour la saisie d'une température et un circuit d'exploitation (2) pour exploiter un signal de sortie de l'élément de détection (1), le capteur thermique présentant des moyens pour éliminer un dépôt de l'élément de détection (1),
**caractérisé en ce que**
le capteur thermique présente un élément de détection de référence (RH) commandé en parallèle à l'élément de détection (RT), par le circuit de commande (3) et le circuit d'exploitation (2) détermine, à partir d'une comparaison du premier signal de sortie de l'élément de détection (RT) et d'un deuxième signal de sortie de l'élément de détection de référence (RH), le dépôt sur l'élément de détection (RH).

2. Capteur thermique selon la revendication 1,
**caractérisé en ce que**
le capteur thermique présente des moyens pour la reconnaissance du dépôt.

3. Capteur thermique selon la revendication 1 ou 2,
**caractérisé en ce que**
les moyens pour éliminer le dépôt présentent pour l'élément de détection (1), un circuit de commande (3) qui produit un chauffage de l'élément de détection (1).

4. Capteur thermique selon la revendication 1,
**caractérisé en ce que**
le circuit de commande (3) commande l'élément de détection de référence (RH) et l'élément de détection (RT) avec un signal périodique.

5. Capteur thermique selon la revendication 1,
**caractérisé en ce que**
le circuit d'exploitation (2) reconnaît le dépôt à partir d'un refroidissement de l'élément de détection (RT), après un chauffage de l'élément de détection (1) produit par le circuit de commande (3).

6. Capteur thermique selon la revendication 1,
**caractérisé en ce que**
les moyens pour éliminer le dépôt présentent une couche catalytique sur l'élément de détection qui produit par chauffage l'élimination du dépôt.

7. Capteur thermique selon la revendication 6,
**caractérisé en ce que**
la couche catalytique est formée par un métal précieux, de préférence du rhodium, du platine ou du palladium.
